# EUROPÄISCHE PATENTANMELDUNG

(11) **EP 0 809 935 A1**
(43) Veröffentlichungstag der Anmeldung: **03.12.1997**
(21) Anmeldenummer: 97108551.9
(22) Anmeldetag: 28.05.1997
(51) Int. Cl.: A01K 91/18

(54) **Vorrichtung zum aussetzgerechten Speichern und Beködern von universellen Langleinen**

(30) Priorität: 30.05.1996 DE 19621659
(71) Anmelder: Stamer, Hartwig, Dr.-Ing., 18209 Bad Doberan (DE); Gomez Giraldéz, Francisco, Dr., 36340 Nigran (Pontevedra) (ES)
(72) Erfinder: Stamer, Hartwig, Dr.-Ing., 18209 Bad Doberan (DE); Gomez Giraldéz, Francisco, Dr., 36340 Nigran (Pontevedra) (ES)
(74) Vertreter: Rother, Bernhard, Dr.-Ing.

(57) **Zusammenfassung**

Die Erfindung betrifft eine Vorrichtung zum aussetzgerechten Speichern und Beködern von universellen Langleinen mit mechanischen Elementen, die auf eine mechanisierte Handhabung von in der Fischerei eingesetzten Langleinen und insbesondere auf solche Prozesse zielen, die bisher noch nicht mechanisiert ausgeführt werden konnten und somit sehr havariebelastet sind.
Die vorliegende Erfindung zielt bei Anwendung des bekannten "HOOKTURB"-Systems auf die Verbesserung der Funktionseigenschaften für eine havariefreie Schnellentspeicherung und Schnellbeköderung der mechanisierten Langleinenfischerei ab.

Erfindungsgemäß wird dieses Problem dadurch gelöst, daß eine Langleine mit ihren einzelnen Gliedern, wie Hauptleine, Mundschnur, Mundschnuranbindungsglied, Angelhaken und dem Clip, als komplexes Gebilde benutzt wird, der weitere zusätzliche Elemente,wie Hakenspeichermagazin in Verbindung mit der Langleinenspeichertrommel, ein Rollenblocksystem, ein Leinenrücklaufsperrelement, eine Einrichtung zum Ausrichten des Angelhakens, eine mit Tastorgan ausgestatteten Reguliereinrichtung zur havariegerechten Abspulen der Langleine, Hakenleitschiene, Aufspuleinrichtung, Hydraulik-Antriebssystem, Aussetztrichter, Hakenseparierer und Köderzuführeinrichtung, eingegliedert sind.

Beim Entspeichern eines solchen auf eine Langleinenspeichertrommel aufgespulten Gebildes werden Entspeicherstörungen, die zu Havariefällen in Form von Hauptleinenrissen, komplizierten Schiffsmanövern und Beköderungsausfällen führen, weitgehendst vermieden. Mit der Beherrschung der Havarieanfälligkeit wird ein weiterer Teilbereich der Langleinenfischerei einer Mechanisierung zugänglich gemacht.

Die Vorrichtung zum aussetzgerechten Speichern und Beködern von universellen Langleinen wird in der mechanisierten Langleinerfischerei angewendet.

## Beschreibung

Die Erfindung betrifft eine Vorrichtung zum aussetzgerechten Speichern und Beködern von universellen Langleinen mit mechanischen Elementen, die auf eine mechanisierte Handhabung von in der Fischerei eingesetzten Langleinen und insbesondere auf solche Prozesse zielen, die bisher noch nicht mechanisch ausgeführt werden konnten und sehr havariebelastet sind. Angesichts der Vielschichtigkeit bei der Anpassung der Langleinenkonstruktion und der Fischköder an verschiedene Fischarten und Fangregionen ist bisher nur ein Teilbereich von Anwendungsfällen durch eine Mechanisierung erfaßbar.

Einer mechanisierten Handhabung bereits gut zugänglich sind Langleinen aus multifilen Leinenmaterialien mit kurzen Mundschnüren und geringen Mundschnurabständen, die mit Stückenfisch beködert werden. Der klassische Prototyp eines solchen mechanisierten Handhabungsprinzips ist das bekannte System " Mustad-Autoline " (Prospekt der Fa.Mustad, Gjovik, Norwegen). Ein großer Teil der bisher im Einsatz befindlichen bekannten mechanischen Systeme lehnen sich an die hierin enthaltene Systemphilosophie an. Diese beruht auf einem statischen Speicherprinzip, d.h. die aussetzgerechte Speicherung der Langleine erfolgt auf der Basis von fest installierten,horizontal angeordneten Schienenprofilen, in die die Angelhaken eingehängt werden und von denen die Leinenelemente buchtenförmig herabhängen.

Weiter ist eine vollmechanischen Handhabung nach dem "HOOKTURB"-Langleinensystem (INFOFISH, Heft 5/95) bekannt, bei dem die Angelhaken in Speicherprofilen untergebracht werden, die radial an der Bordscheibe einer Windentrommel befestigt sind. Die Leinenelemente werden auf der Windentrommel aufgespult, deren Einzelheiten in den Patenten: EP- Nr.0514899 und FR-Nr.8814993 beschrieben worden sind.

In der Gegenüberstellung beider o. g. Speichergrundtypen ist signifikant, daß das "HOOKTURB-System" weitaus weniger Einschränkungen an die Langleinenkonstruktion stellt, als es bei den Systemen, die an das statische Speicherprinzip anknüpfen der Fall ist. D.h., mit dem "HOOKTURB"-System können erstmals multifile und monofile Leinen auch mit langen Mundschnüren und großen Mundschnurabständen mechanisch gespeichert werden.

Unter dem Gesichtspunkt einer industriellen Langleinenfischerei, wozu die Langleine nicht nur einem mechanischen Speicher, sondern auch einem Schnellaussetzprozeß mit Schnellbekö-derung unterworfen ist, weist das "HOOKTURB"-System Nachteile in Bezug auf die Systemdynamik auf Verschiedenste kaum ganz zu vermeidende Leinenauslaufstörungen beim Entspeichern der schnell routierenden Speichertrommel, Durchlaufstörungen durch den Beköderungsmechanismus sowie Seegangseinflüsse sind derzeit noch Quellen hoher Havarieanfälligkeit. Hier will die Erfindung Abhilfe schaffen.

Die vorliegende Erfindung zielt bei Anwendung des bekannten HOOKTURB-Systems auf die Verbesserung der Funktionseigenschaften für eine havariefreie Schnellentspeicherung und Schnellbeköderung der mechanisierten Langleinenfischerei ab

Diese Aufgabe wird durch eine Vorrichtung nach Anspruch 1 gelöst.

Eine vorteilhafte Ausgestaltung der Erfindung ist in den weiteren Unteransprüchen 2 bis 15 angegeben.

Eine Langleine stellt mit ihren einzelnen Gliedern, wie Hauptleine, Mundschnur, Mundschnuranbindungsglied und Angelhaken ein komplexes Gebilde dar. Beim Entspeichern eines solchen auf eine Speichertrommel aufgespulten Gebildes sind Entspeicherstörungen nicht auszuschließen. Insbesondere beim Schnellaussetzprozeß, d.h. bei schnell routierender Speichertrommel, können Leinenablaufstörungen an der Trommel und Durchlaustörungen an den nachfolgenden Beköderungsmechanismen zu Havariefällen in Form von Hauptleinenrissen, komplizierten Schiffsmanövern und Beköderungsausfällen führen. Der Vorteil der Erfindung besteht darin, daß solche Störfälle im wesentlichen vermieden werden. Mit der Beherrschung der Havarieanfälligkeit wird ein weiteres Spektrum der Langleinenfischerei einer Mechanisierung zugänglich gemacht.

Ein weiterer Vorteil besteht in der weitgehenden Einhaltung der Speichergetriebegeometrie beim Einspeichern der Mundschnüre mit Angelhaken mittels eines der Windentrommel vorgeschalteten Rollenblocksystems mit Justiermöglichkeit, mit dem die richtige geometrische Speicherkonstellation eingestellt werden kann. Vorteilhaft ist weiter die optimale Formgebung der Speicher und Speicherlippenauslaufkante in Bezug auf ein störfreies Herausgleiten des Hakens, weil Abrissen durch Festklemmen eines Angelhakens an den Radialspeichern der Speichertrommel weitgehendst vorgebeugt werden kann.

Durch abgerissenen Haken-oder Mundschnurirrläufer, die beim Entspeichern auftreten, kommt es zu Verklemmungen infolge eines Hakenirrläufers im Beköderungsgetriebe, die zu einer Blockierung des freien Durchlaufs nachfolgender Leinenelemente führt. Infolge dessen kann es zu einem Leinenstau vor der Windentrommel kommen. Die damit verbundene Buchtenbildung birgt die Ursache eines Hauptleinenrisses in sich. Als eine weitere Folgeerscheinung einer Getriebeblockierung ist ein serieller Abriß aller folgenden Haken denkbar. Durch ein elastisches Glied im Angelhakenführungsgetriebe wird dieser Fehler vorteilhaft beseitigt. Durch diese Hakenzwangsführung wird die durch den Irrläufer verursachte Verklemmung aufgelöst.

Ein weiterer Vorteil ergibt sich daraus, daß nachfolgende Haken über eine schalterbetätigte Weiche zu einem Reservemechanismus geleitet werden, mittels dessen die Beköderung fortgesetzt werden kann, geleitet werden, wenn es zu einer Verklemmung kommt. Die aufgetretene Störung kann währenddessen behoben werden.

Ein noch weiterer Vorteil ergibt sich daraus, daß der durch Buchtenbildung an der routierenden Trommel mögliche Haveriefall durch ein der Leinenform angepaßtes Tastorgan, das mit einem Bremsmechanismus verkoppelt ist, wirksam vermieden wird.

Ein Festklemmen eines Angelhakens ist auch dann einzuschränken, wenn ein Kompromiß zwischen Fangeigenschaft des Angelhakens und seiner Speichereigenschaft gegeben ist. Die Erfindung bietet den Vorteil darin, daß einer fiktiver Haken mit speicher- und durchlauffreundlichen Eigenschaften als zu speicherndes Glied gewählt werden kann. Beim Durchlauf durch den Beköderer fängt dieser jedoch statt eines Köders einen Clipkörper, an dem das fangende Element befestigt ist.

Abrisse von Mundschnüren beim Aussetzen können auch wirksam vermieden werden, wenn lose Mundschnurbuchten nicht frei herumfliegen, sondern ordnungsgemäß unter den Lagen der Hauptleine versteckt sind. Aufbau und Wirkungsweise der Erfindung werden anhand von Ausführungsbeispielen näher erläutert. Es zeigen:
- Fig. 1 :: schematischer Aufbau der Vorrichtung zur Anwendung des "HOOKTURB"-Systems für die mechanisierte Langleinenfischerei
- Fig. 2: Aufbau einer Langleine
- Fig.3a:: Langleinenabspulgeometrie im Betriebzustand (Normalfall)
- Fig.3b :: Langleinenabspulgeometrie mit festgeklemmten Haken (Haveriefall)
- Fig. 4:: Langleinenabspulgeometrie mit Leinenrücklaufsperrelement (Havarievermeidung)
- Fig. 5 :: Langleinenabspulgeometrie mit abgerissenem Hakenirrläufer (Haveriefall)
- Fig. 6 :: Steuereinrichtung im Falle von Leinndurchlaufstörung mit Tastorgan
- Fig. 7 :: Hakenspeicherprofilquerschnitt
- Fig. 8 :: Kontur der Hakenprofilabwicklung an der Öffnungsseite
- Fig. 9 :: Hakenspeicherlippenkontur
- Fig. 10 :: Hakenausrichtmechanismus-Seitenansicht, Normalfunktion
- Fig. 11 :: Hakenausrichteinrichtung-Hinteransicht, Normalfunktion
- Fig. 12:: Hakenausrichtmechanismus-Hinteransicht, Havariefunktion
- Fig. 13:: Hakenleiteinrichtung mit Havarieumgehungsweiche
- Fig. 14:: Hakenleiteinrichtung mit mechanisch gesteuerter Weiche
- Fig. 15:: Langleinenabspulgeometrie bei falscher Hakenspeicherung
- Fig. 16:: Umlenkblocksystem mit speichergerecht justierbarer Umlenkrolle
- Fig. 17:: Speichergerechter Blindhaken mit Clipkörperverbindung
- Fig. 18:: Aufspuleinrichtung

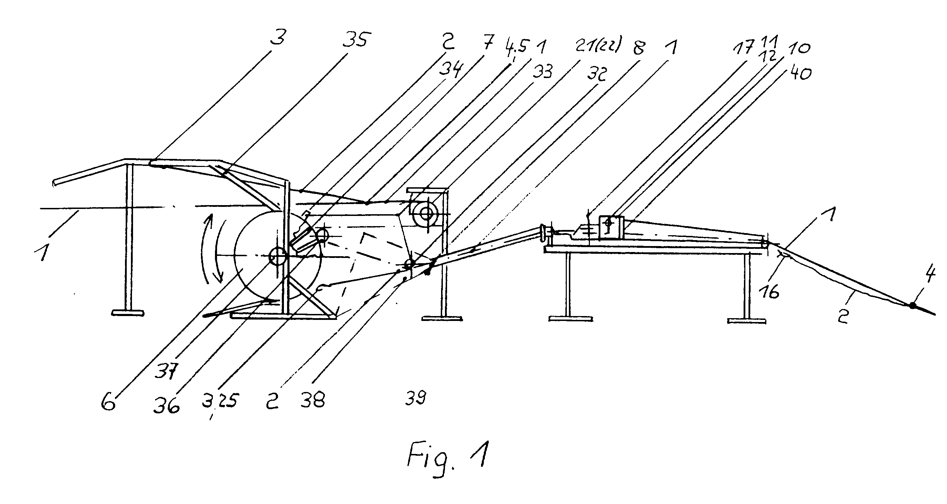

Nach Fig. 1 besteht die Vorrichtung zum aussetzgerechten Speichern und Beködern von universellen Langleinen für die mechanisierte Langleinenfischerei aus einer Hauptleine 1, Mundschnur 2, Angelhaken 3, Mundschnurverbindungen 4, einem Clip 5, einer Langleinenspeichertrommel 6, Hakenspeichermagazin 7, Leinenrücklaufsperrelement 8, der Angelhakenstützwand 20, dem Vertkalpendel 11, dem elastischen Pendelfiger 12, einer Drehnabe 17, dem Rollenblochsystem 20;21, den Blindhaken 25 anstelle des Angelhakens 3, dem Clipkörper 27 bis 31, eine Reguliereinrichtung 32 bis 34 und den Elementen, wie Hakenleitschiene 35, Aufspuleinrichtung 36, Hydraulik-Antriebssystem 37, Aussetztrichter 38, Hakenseparierer 39 und Köderzuführeinrichtung 40.

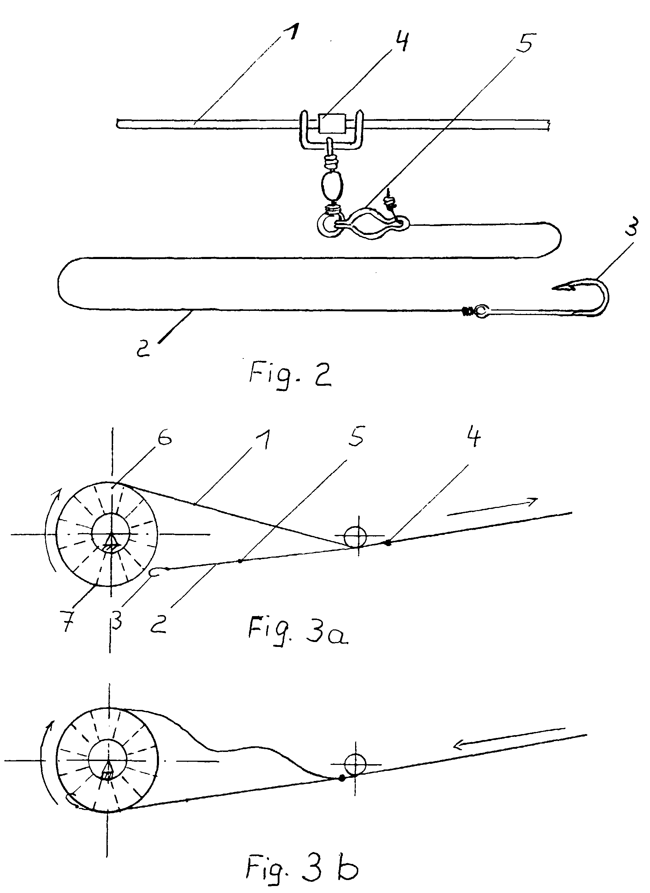

Fig.2 zeigt die Langleine als komplexes Gebilde, das aus Hauptleine 1, der Mundschnur 2, dem Angelhaken 3, der Mundschnurverbindungen 4 und dem Clip 5 besteht.

Fig. 3a zeigt die Langleinenabspulgeometrie im Betriebszustand als Normalfall. In dem Falle, daß sich ein Angelhaken 3 nicht rechtzeitig aus der rotierenden Langleinenspeichertrommel 6 zu lösen vermag, wird die bereits ausgelaufene Hauptleine1 von der nun festsitzenden Mundschnur 2 infolge Massenträgheit der Langleinenspeichertrommel 6 zurückgerissen -Fig.3b-.

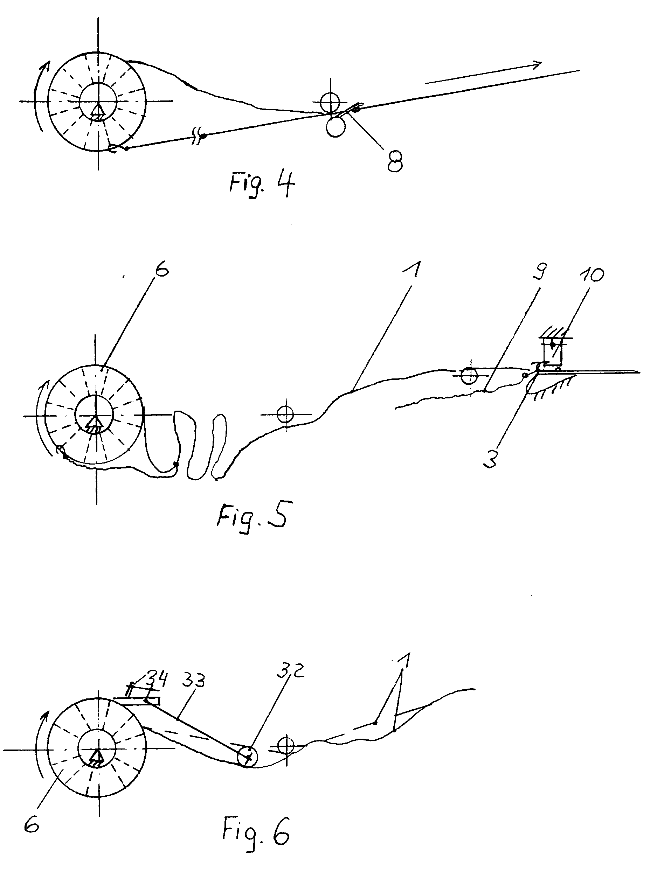

Eine dazu geeignete Lösung ist die Leinenrücklaufsperre, durch die Verdickungen an der Leine, wie z.B. Mundschnuranbindungsglieder 4, nur in Auslaufrichtung passieren können. Im Rücklauffalle setzen sich diese fest und es wird ein Abriß an der als Schwachstelle ausgelegten Mundschnur bewirkt. Nach Fig. 4 beseht das Leinenrücklaufsperrelement 8 aus einer in Leinenlaufrichtung geneigten Platte 7 mit einem nach unten begrenzten parallelen Spalt, der zu seiner Öffnung hin keilförmig ausläuft. Die Spaltbreite ist geringfugig größer gestaltet als der Hauptleinendurchmesser. In Leinendurchlauhöhe angebracht, durchläuft die Leine den Spalt, Anbindungselemente 4,5 werden über den Spalt hinweggehoben. Im Falle eines Leinenrücklaufs setzen sich diese Elemente am Spaltgrund fest, es erfolgt ein Abriß an der als Schwachstelle ausgelegten Mundschnur 2 und der Leinenauslauf geht weiter ungestört vonstatten.

Die in Fig. 6 dargestellte Trommel- Steuereinrichtung dient dem Havarieschutz von Leinendurchlaufstörungen infolge Leinenabspul-Unstetigkeiten. Ein mit der ablaufenden Hauptleine 1 verbundenes, hakengleitgerechtes Tastorgan 32, das in Verbindung mit einem Schaltorgan 33 einen Bremsschalter 34 steht, betätigt ein nicht näher dargestelltes Bremsorgan.

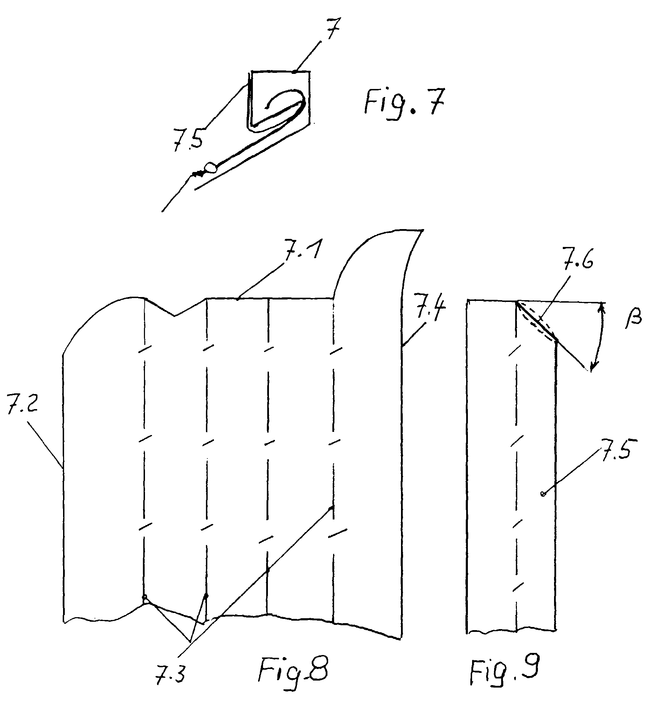

Nach Figuren 7; 8 und 9 besitzt das havariesichere Hakenspeichermagazin 7 eine Auslaufkante, die in ihrem Querschnitt labyrinthartig geformt ist und in seiner Abwicklung an der Profilöffnungskante 7.1 die qualitativ abgebildete Kontur aufweist. Von der Vertikalkante 7.2 aus beginnend, verläuft die Kontur kreis- bis parabelförmig bis zur ersten Knickkante 7.3. Das nächste Liniensegment zwischen der ersten und zweiten Knickkante ist winklig oder bogenförmig eingebuchtet.Die darauf folgende Linie zwischen zweiter und vierter Knickkante ist als horizontale Gerade gewählt worden, ist als solche jedoch nicht zwingend. Ab vierter Knickkante erfolgt ein parabel-oder kreisbogenförmiger Anstieg. Diese Linie schneidet sich mit der Profilseitenkante 7.4. Letztere steigt vom Fuß beginnend vertikal an und neigt an ihrem oberen Ende leicht nach außen. Bei der erfindungsgemäßen qualitativen Linienfolge sind die Knickkanten jedoch nicht zwingend als Grenzen zu betrachten. Die elastische Hakenspeicherlippe 7.5 hat an der Speicherauslaufkante die linear oder bogenförmige Schnittkontur 7.6 mit einem Schnittwinkel von 30°< β < 60°, der von funktioneller Wichtigkeit ist.

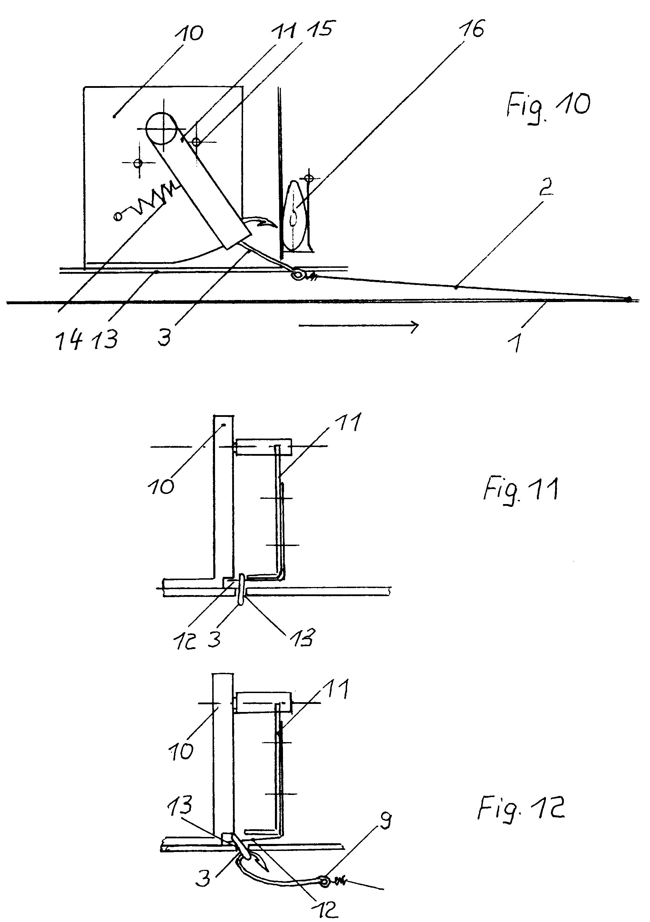

Im Falle einer Havarie im Beköderungsgetriebe nach den Figuren 10, 11 und 12 tritt der in Fig. 5 dargestellte Havariefall -Buchtenbildung- ein. Zur Beseitigung dieses Störfalles wird der in den Figuren. 10, 11 und 12 havariegeschützte Angelhakenführungsmechanismus mit elastischem Ausklinkelement benutzt.

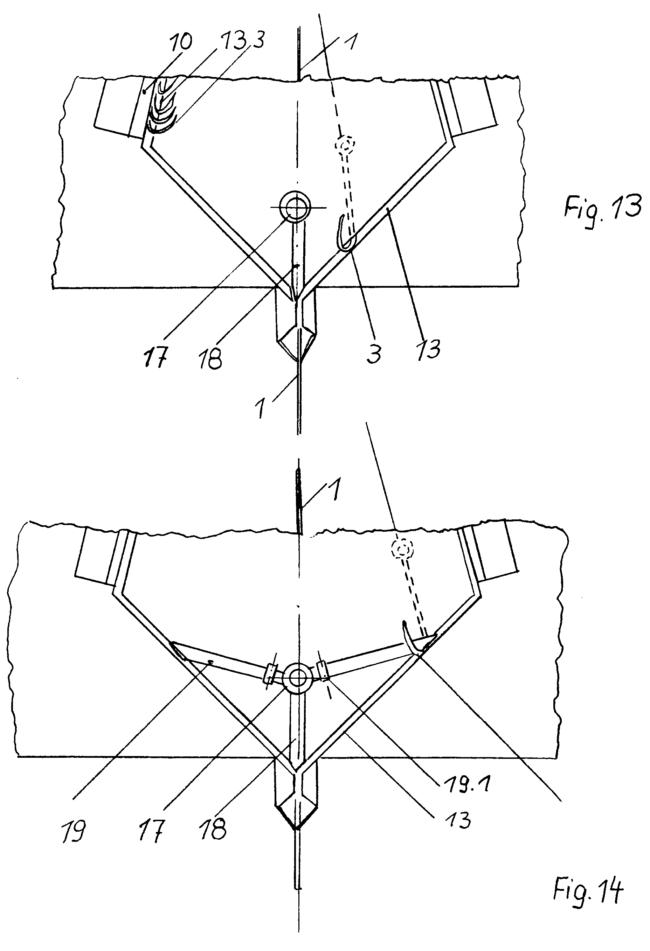

Der den Angelhaken 3 zum Köderfisch 16 führende Mechanismus besteht aus der Angelhakenstützwand 10, dem Vertikalpendel 11 mit Pendelfinger 12, dem Angelhakenführungsspalt 13, der Pendelrückzugsfeder 14 und dem Pendelanschlag 15. Der im Hakenführungsspalt 13 entlang gleitende Angelhaken 3 wird vom Pendelfinger 12 des Pendels 11 eingefangen - Fig. 11-. Der förtlaufende Angelhaken 3 reißt das Pendel 11 mit sich fort und wird durch dasselbe angehoben - Fig. 10-. Da der zur Hakenstützwand 10 weisende Pendelfinger 12 eine abgeschrägte Fangkante aufweist, die mit ihrem Ende die Stützwand 10 anähernd berührt und das Pendel 11 federbelastet ist, legt sich der Angelhaken 3 mit fortgesetzter Hubbewegung an die Angelhakenstützwand 10 an. Der durch den Knoten 3.1 verdickte Schaft des Angelhakens 3 kann dabei nicht durch den schmal gehaltenen Hakenspalt 13 dringen. Das so fixierte Gleichgewicht des Angelhakens 3 bricht zusammen, wenn die Stützwirkung durch die Angelhakenstützwand 10 wegfällt. Dieser Zeitpunkt kann so gewählt werden, daß er mit dem Beköderungsakt übereinstimmt. Im Falle eines Hakenirrläufers 9 kommt es zu einer Blockierung des Pendelhubes, was zu einer Abrisserie der folgenden durchlaufenden Angelhaken 3 führen kann. Führt man hingegen den Pendelfinger 12 als elastisches Glied aus, kann der durch einen Irrläufer 9 blockierte Angelhaken 3 durch einen sich öffnenden Spalt freischlüpfen -Fig.12-.

In Fig. 13 und Fig. 14 ist Hakenleiteinrichtung mit Havarieumgehungsweiche dargestellt. Kommt dennoch eine Hakendurchlaufblockade zustande, besteht zu deren Minderung die Möglichkeit, durch Betätigung einer mittels Drehnabe 17 verstellbaren Hakenleitzunge 18 einen zweiten Hakenführungsspalt 13 anzusteuern, der zu einer Reservebeköderungsstation führt. Damit kann die haverierte Stelle ohne Beköderungsverlust wieder funktionsfähig gemacht werden.

Im Falle einer Hochfrequenzbeköderung kann die Drehnabe 17 durch zwei Hakenfanghebel 19 ergänzt werden, die so angeordnet sind, daß eine mechanische Zweiweg-Wechselschaltung entsteht.Das dazu erforderliche Drehmoment um die Drehnabe 17 wird von jeweils dem Angelhaken 3 ausgelöst, der sich seinen Weg durch den vom Fanghebel 19 versperrten Hakenführungsspalt 13 bahnen muß. Das so entstehende doppelseitige Beköderungssystem kann im Havariefalle wieder in ein Einwegsystem verwandelt werden, wenn die Hakenfanghebel, z.B. durch ein Drehgelenk 19.1 klappbar gestaltet werden.

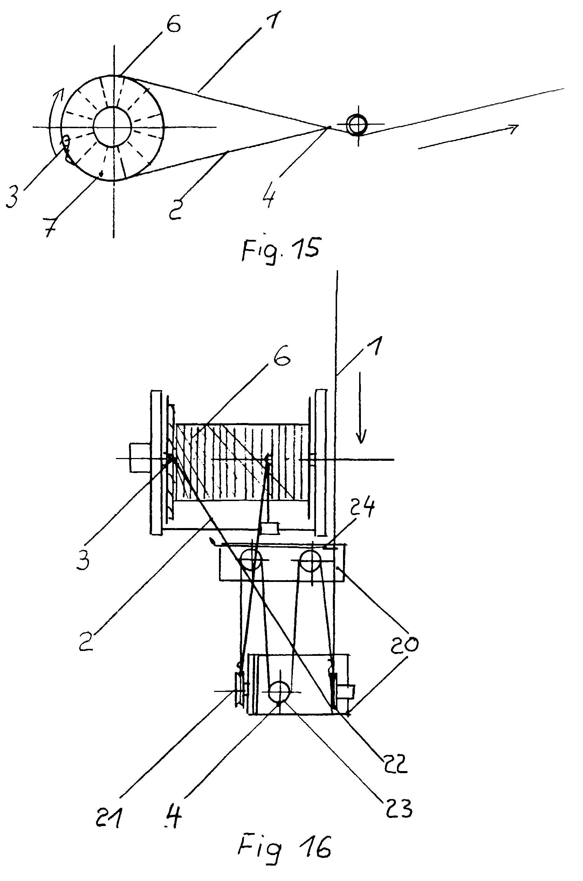

Fig. 15 zeigt die Langleinenabspulgeometrie bei falscher Hakenspeicherung, die mittels der Ausführung des Umlenkblocksystems nach Fig. 16 verhindert wird.

Nach Fig. 16 besteht der justierbare Speichergetriebemechanismus aus dem der Langleinenspeichertrommel 6 vorgeschaltete Blocksystem 20. Dieses wird von der Langleine vor dem Speichern durchlaufen. Durch den verstellbaren Endblock 21 kann die entspeicherungsgerechte Speicherkonstellation eingestellt werden. Komplettiert wird das Blocksystem 20 durch eine Holerrolle 22, Umlenkrollen 23 und Leinenführungsbügel 24. Der justierbare Speichergetriebemechanismus ermöglicht eine aussetzgerechte Langleinenspeicherung. Im einfachsten Fall kann das Blocksystem 20 auf einen verstellbaren Block reduziert werden.

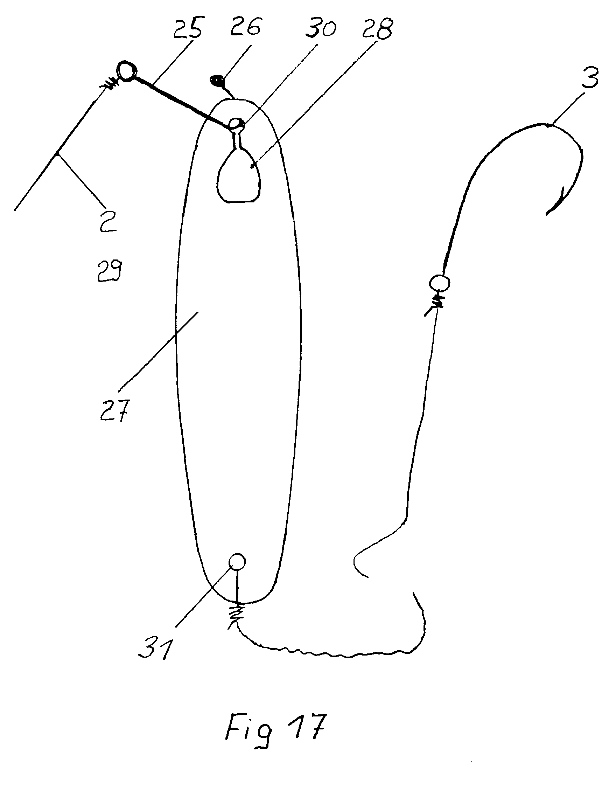

Erfolgt der Leinenspeicherprozeß mittels eines Blindhakens 25 nach Fig. 17, so muß das fischfangende Element, bestehend aus Angelhaken 3 mit Köderfisch 16 beim Aussetzen an die Mundschnur 2 angebracht werden. In diesem Falle ist eine mechanische Schnellclipanbindung erforderlich. Diese besteht aus einem Clipkörper 27 der mit dem Blindhaken 25 zusammen eine formschlüssige Verbindung bilden kann. Zur mechanischen Herstellung dieser Verbindung wird der vorhandene Beköderungsmechanismus 10 bis 19.1 eingesetzt. Statt eines Köders fängt der Blindhaken 25 hier den Clipkörper 27, an dem mit einer Leine verbunden, der beköderte Angelhaken 3 hängt. Neben einer fixiergerechten Form erhält der Clipkörper 27 ein clipgerechtes Hakefangauge 28, das über einen elastischen Kanal 29 mit dem Hakenfixierauge 30 verbunden ist und einem Zugauge 31. Der Blindhaken 25 ist mittels Blindhakenendknopfes 26 gegen Aushaken aus dem Zugauge 31 geschützt. Da der Blindhaken 25 den Kanal 29 nur unter Zugbelastung zwangsweise vorwärts und rückwärts passieren kann, ist er somit auch vor einem Zurückgleiten in das große Hakenfangauge 28 geschützt.

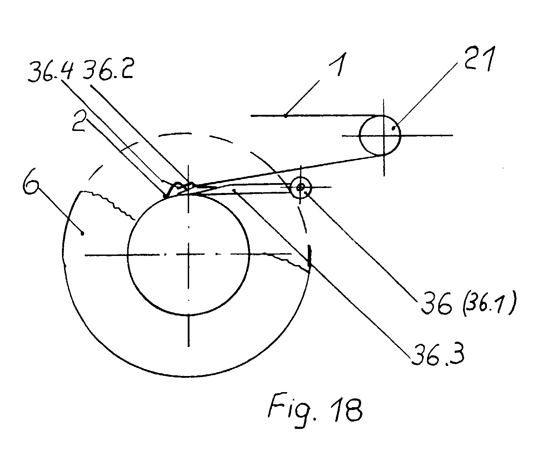

Nach Fig. 18 wird mittels der Ausspuleinrichtung 36, bestehend aus einer Leitspindel 36.1 und Leitspindel 36.2, durch zusätzliches Einfügen einer Stütztaste 36.3 bewirkt, daß die Leitspirale 36.2 im konstanten Abstand zum Trommelkörper geführt wird und sich so nicht in den aufgetrommelten Leinenelementen verfangen kann. Ein zusätzlicher elastischer Stab, der Schlaufenzieher 36.4, der am Ende der Leitspindel 36.1 befestigt ist, zieht die Mundschnüre 2 stramm und steckt die Buchten unter die aufgewickelte Hauptleine 1.

### Bezugszeichenliste

- 1: - Hauptleine
- 2: - Mundschnur
- 3: - Angelhaken , 3.1 knoten
- 4: - Mundschnuranbindung
- 5: - Clip
- 6: - Langleinenspeichertrommel
- 7: - Hakenspeichermagazin
- 7.1: - Hakenspeichermagazin-Kontur der Abwicklung an der Profilöffnungsseite
- 7.2: - Hakenspeichermagazin-Profilseitenkante 1
- 7.3: - Hakenspeichermagazin-Knickkante
- 7.4: - Hakenspeichermagazin-Profilkante 2
- 7.5: - Hakenspeicherlippe
- 7.6: - Speicherlippenkontur
- 8.: - Leinenrücklaufsperrelement
- 9.: - Hakenirrläufer
- 10.: - Angelhakenstützwand
- 11.: - Vertikalpendel
- 12.: - elastischer Pendelfinger
- 13.: - Hakenführungsspalt
- 14.: - Pendelrückzugsfeder
- 15.: - Pendelanschlag
- 16.: - Köderfisch
- 17.: - Drehnabe
- 17.1: - Drehnabe mit Sensorsteuerorgan
- 18.: - Hakenleitzunge
- 19.: - Hakenfanghebel
- 19.1: - Hakenfanghebel- Klappgelenk
- 2o: - Umlenkrollenrollenblocksystem ? Rollenblock
- 21: - verstellbare Rolle
- 22: - Holerrolle (angetriebene Rolle)
- 23: - Umlenkrolle
- 24: - Leinenführungsbügel
- 25: - Blindhaken
- 26: - Blindhakenendknopf
- 27: - Clipkörper
- 28: - Hakenfangauge
- 29: - Kanal
- 30: - Hakenfixierauge
- 31: - Zugauge/Befestigungsauge
- 32: - Tastorgan ,
- 33: - Schaltorgan
- 34: - Bremsschalter ,
- 35: - Hakenleitschiene
- 36: - Aufspuleinrichtung ,
- 36.1: - Leitspindel
- 36.2: - Leitspirale ,
- 36.3: - Stütztaste
- 36.4: - Schlaufenzieher ,
- 37: - Hydrauliksystem
- 38: - Aussetztrichter ,
- 39: - Hakenseparierer
- 40.: - Köderzuführeinrichtung

## Patentansprüche

1. Vorrichtung zum aussetzgerechten Speichern und Beködern von universellen Langleinen für die mechanisierte Langleinenfischerei mit mechanischen Elementen, dadurch gekennzeichnet,
daß zum Aufspulen, Aufbewahren und Aussetzen eine aus einer Hauptleine (1), Mundschnur (2), Angelhaken (3), Mundschnurverbindungen (4) bestehende Langleine, die Blindhaken (25) anstelle des Angelhakens (3) und Clipkörper (27), die mit der Beköderungseinrichtung (40) in das Leinensystem eingeführt werden, besitzt und eine Langleinenspeichertrommel (6) vorgesehen sind,
daß ein Hakenspeichermagazin (7) in Verbindung mit der Langleinenspeichertrommel (6) vorgesehen ist,
daß in das Hakenspeichersystem (7) eine Hakenspeicherlippe (7.5) integriert ist,
daß Hakenmagazin (7) und Hakenspeicherlippe (7.5) an der Hakenaustrittsöffnung spezielle Zuschnitte aufweisen,
daß zum Zwecke einer havariefreien Hakenspeichergeometrie ein Rollenblocksystem (20) der Langleinenspeichertrommel (6) vorgeschaltet ist,
daß zum Zwecke eines havariefreien Aussetzens des Langleinensystems ein Leinenrücklaufsperrelement (8) und eine Einrichtung zum Ausrichten des Angelhakens (3) angeordnet sind,
daß eine mit Tastorgan (32) ausgestattete Reguliereinrichtung zum havariegerechten Abspulen der Langleine in den Weg der Hauptleine (1) eingeordnet ist,
daß eine Aufsspuleinrichtung (36) mit Leitspindel (36.1) und Leitspirale (36.2) synchronisiert mit einer Stütztaste (36.3) und einem Schlaufenzieher (36.4) zusammenarbeitet und
daß aus weiteren Elementen, wie Hakenleitschiene (35), Aufspuleinrichtung (36), Hydraulik-Antriebssystem (37), Aussetztrichter (38), Hakenseparierer (39) und Köderzuführeinrichtung (40) besteht.

2. Vorrichtung nach Anspruch 1, dadurch gekennzeichnet, daß das Leinenrück-laufsperrelement (8) gebildet ist aus einem in Langleinenauslaufrichtung geneigten mit Parallelkerbe versehenen Flächenelement, wobei die Parallelkerbe zur Kerböffnung hin keilfömig ausläuft und die Parallelkerbspaltbreite größer als der Hauptleinendurchmesser und kleiner als der Mundschnuranbindungsglieddurchmesser ist.

3. Vorrichtung nach Anspruch 1, dadurch gekennzeichnet, daß das Hakenspeichermagazin (7) mit an sich bekanntem Profilquerschnitt derart geformt ist, daß dessen Kontur der Abwicklung an der Profilöffnungsseite (7.1) einen Linienverlauf mit der Profilseitenkante (7.2) beginnend in die kreis-und parabelförmige Kontur bis zur ersten Knichkante (7.3) aufweist, die darauf folgende Linie bis zur nächsten Knickkante winklig oder bogenförmig eingebuchtet ist, darauf vorzugsweise eine Gerade folgt und nach der letzten Knickkante parabel- oder kreisförmig ansteigt und daß die Profilkante (7.4) am oberen Ende leicht nach außen geneigt ist.

4. Vorrichtung nach Anspruch 1 und 3, dadurch gekennzeichnet, daß Hakenspeicherlippe (7.5) derart ausgebildet ist, daß deren Abwicklungskontur an der Hakenspeichermagazin-Öffnungsseite eine Speicherlippenkontur (7.6) entsprechend einem mittleren Schnittwinkel β von 30°< β < 60° aufweist.

5. Vorrichtung nach Anspruch 1, dadurch gekennzeichnet, daß Absspul-Steuereinrichtung zum Abspulen der Hauptleine (1) von der Langleinenspeichertrommel (6) aus einem haken-gleitgerechten, die Hauptleine (1) kontaktierenden Tastorganes (32) in Verbindung mit einem Schaltorgan (33) und einem Bremsschalter (34) besteht, der ein an sich bekanntes Bremsorgan steuert.

6. Vorrichtung nach Anspruch 1, dadurch gekennzeichnet, daß havariegeschützte Einrichtung zum Ausrichten des Angelhakens (3) in Verbindung mit dem an sich bekannten Haken-separierer (39) mittels einer formschlüssigen Dreipunktaufhängung des Angelhakens (3) kombiniert mit einem Drehmechanismus, bezogen auf die Hakenschaftachse, verwirklicht ist.

7. Vorrichtung nach Anspruch 1 und 6, dadurch gekennzeichnet, daß Einrichtung zum Ausrichten des Angelhakens (3) aus einer Hakenführungswand (10), einem Pendel (11), einem elastischen Pendelfinger (12), einem Hakenführungsspalt (13) einer Pendelrückstellfeder (14) und Pendelanschlag (15) besteht.

8. Vorrichtung nach Anspruch 1, 6 und 7, dadurch gekennzeichnet, daß Einrichtung zum Ausrichten des Angelhakens (3) aus einem doppelten Hakenführungsspalt (13), einer Hakenleitzunge (18) und einer Drehnabe (17) besteht.

9. Vorrichtung nach Anspruch 1, 6, 7 und 8, dadurch gekennzeichnet, daß Einrichtung zum Ausrichten des Angelhakens (3) aus einem doppelten Hakenführungsspalt (13), aus einer Drehnabe (17) in Verbindung mit einer Hakenleitzunge (18) und zwei Hakenfanghebeln (19) besteht.

10. Vorrichtung nach Anspruch 1, 6, 7, 8 und 9, dadurch gekennzeichnet, daß die Hakenfanghebel (19) der Einrichtung zum Ausrichten des Angelhakens (3) mit einem Gelenk (19.1) versehen sind.

11. Vorrichtung nach Anspruch 1, 6, 7, 8, 9 und 10, dadurch gekennzeichnet, daß Einrichtung zum Ausrichten des Angelhakens (3) bei mehr als einem Hakenführungsspalt (13) mit einer Drehnabe (17), einem mit Drehnabe(17) verbundenem Sensorsteuerorgan (17.1) und Hakenleitzunge (18) ausgerüstet ist.

12. Vorrichtung nach Anspruch 1, dadurch gekennzeichnet, daß eine Reguliereinrichtung als Blocksystem zur havariegerechten Speicherung der Hauptleine (1) auf der Langleinen-speichertrommel (6) aus einem durch eine oder mehrere Rollen gebildetes Umlenkrollen-blocksystem (20) mit mindestens einer räumlich verstellbaren Rolle (21) und/ oder zusätzlich aus einer angetriebenen Holerrolle (22), einer Umlenkrollen (23) und einem Leinen-führungsbügel (24) besteht.

13. Vorrichtung nach Anspruch 1, 3, und 12, dadurch gekennzeichnet, daß das Haken-speichermagazin (7) havariegerecht mit speicherbarem Blindhaken (25), mit Blindhaken-endknopf (26) in Verbindung mit dem Clipkörper (27), mit Hakenfangauge (28) mit Kanal (29), mit Hakenfixierauge (30) und mit Zugauge (31) ausgebildet ist.

14. Vorrichtung nach Anspruch 1 und 13, dadurch gekennzeichnet, daß der Clipkörper (27) aus Tragrumpf mit Zugauge (31), dem eingehüllten Hakenfangauge (28), dem Kanal (29) und dem Hakenfixierauge (30) besteht und als Verbindungselement von mit Knoten versehene Mundschnüre (2) verwendet werden.

15. Vorrichtung nach Anspruch 1, dadurch gekennzeichnet, daß Aufsspuleinrichtung (36) mit Leitspindel (36.1) und Leitspirale (36.2) zusätzlich mit einer Stütztaste (36.3) und einem Schlaufenzieher (36.4) ausgerüstet sind.
